Europäisches Patentamt

European Patent Office

Office européen des brevets

(11) Veröffentlichungsnummer: **0 125 441**
**B2**

## (12) NEUE EUROPÄISCHE PATENTSCHRIFT

(45) Veröffentlichungstag der neuen Patentschrift:
30.08.89

(21) Anmeldenummer: 84103302.0

(22) Anmeldetag: 26.03.84

(51) Int. Cl.⁴: **B 65 G 15/32, B 32 B 25/04**

(54) Fördergurt.

(30) Priorität: 11.05.83 DE 3317192

(43) Veröffentlichungstag der Anmeldung:
21.11.84 Patentblatt 84/47

(45) Bekanntmachung des Hinweises auf die Patenterteilung: 16.07.86 Patentblatt 86/29

(45) Bekanntmachung des Hinweises auf die Entscheidung
über den Einspruch: 30.08.89 Patentblatt 89/35

(84) Benannte Vertragsstaaten:
AT BE CH DE FR GB IT LI LU NL SE

(56) Entgegenhaltungen:
DD–A– 159 256
US–A– 4 234 702
H. Westphal "Handbuch der Fördergurte" VEB Deutsche Verlag für Grundstoffindustrie, Leipzig 1969, Seiten 113-146
Bayer Leverkusen, "Handbuch für die Gummi-Industrie", 1.5.1931, Seiten 599-601, 606, 607

(73) Patentinhaber: Continental Gummi-Werke Aktiengesellschaft
Königsworther Platz 1
D-3000 Hannover 1 (DE)

(72) Erfinder: Brüggemann, Michael, Dipl.-Ing.
Oderstrasse 6
D-3511 Katlenburg (DE)
Erfinder: Kerwel, Wolfgang
Margeritenweg 38 OT Hillerse
D-3410 Northeim (DE)

EP 0 125 441 B2

## Beschreibung

Die Erfindung bezieht sich auf aus natürlichem oder synthetischem Kautschuk mit Verstärkungseinlagen hergestellte Fördergurt.

Die Förderung feuchten oder klebrigen Fördergutes wie beispielsweise lehm- oder tonhaltigen Erdreichs, feuchten Abraumes, teigiger Substanzen und Chemikalien u. dgl. mit endlosen biegsamen Fördergurten wirft stets das Problem unkontrollierbarer Verschmutzungen der Förderanlage, in Extremfällen auch der verminderten Förderleistung durch anbackende Fördergutreste auf. Die als bekannte Hilfsmittel dagegen eingesetzten Gurtabstreifer sind meistens nur beschränkt wirksam, und sie unterliegen zudem ihrerseits starkem Verschleiss, der ständige Wartung und wiederholten Austausch notwendig macht. Es hat daher in der Vergangenheit schon nicht an Versuchen gefehlt, zum Selbstreinigen der Fördergurte anstelle mechanischer Einrichtungen eine aus dem chemischen Mischungsaufbau resultierende besondere Oberflächenbeschaffenheit der tragenden Gurtschichten wirksam zu machen. So wird nach einem bekannten Vorschlag (DD-A-159 256) die erwünschte schmutzabweisende Eigenschaft der Gummi-Deckplatten durch Zumischen eines niedermolekularen Polyäthylens angestrebt, ohne dass damit aber durchschlagende Erfolge erzielt werden konnten. Nach einem· anderen Vorschlag (US-A-4,234,702) hat man Mischungen natürlichen oder synthetischen Kautschuks aus Gründen leichterer Vulkanisierbarkeit auch schon Silikonkautschuk zugegeben. Es ist demgegenüber Aufgabe der Erfindung, das Festsetzen von Fördergut an der Gurtoberfläche unabhängig von seiner Beschaffenheit und Konsistenz und das unerwünschte Mitführen anbackender Fördergutreste von vornherein zu verhindern oder wenigstens in dem Masse auszuschliessen, dass die mechanische Wirkung zusätzlich vorgesehener Abstreifer voll zum Tragen kommen kann.

Nach der Erfindung zeichnen sich Fördergurte der eingangs genannten Art dadurch aus, dass zumindest die das Fördergut unmittelbar aufnehmende obere Deckschicht aus einer Mischung eines Naturkautschuks mit Butadienkautschuk, Silikonkautschuk, einem Polyolefin und Silikonöl hergestellt ist, wobei das Polyolefin vorteilhaft ein Polyäthylen niedriger Dichte zwischen den hierfür allgemein anerkannten Grenzwerten 0,910 und 0,925 g/cm³ ist. Zweckmässig enthält die Deckschichtmischung Natur- und Butadienkautschuk in wesentlich höheren Anteilen als die übrigen Bestandteile, beispielsweise in Grössenordnungen von jeweils etwa 25 % gegenüber jeweils höchstens 20 % Silikonkautschuk und Polyolefin bzw. Polyäthylen.

Der neuartige Mischungsaufbau der Fördergurt-Deckschicht führt im Zusammenwirken aller wesentlichen Bestandteile zu einem überraschenden schmutzabweisenden Effekt. Während das über lange Zeiträume langsam ausschwitzende Silikonöl die Deckschicht durch und durch unabhängig vom Verschleiss der Oberfläche wasserabstossend macht, verstärk der Polyolefinzusatz diese Wirkung durch Erhöhen der Shorehärte, was auch dem mechanischen Verankern von Fördergut in der Gurtoberfläche vorbeugt. Andererseits hat der Butadienkautschukanteil Verbesserungen im Elastizitätsverhalten und gleichzeitig eine Herabsetzung des Nass-Rutschwiderstandes der·Gurtoberfläche zur Folge, so dass auch schon angetrocknetes Fördergut in der Bewegung des Gurtes abgesprengt und darüber hinaus die Wirksamkeit mechanischer Abstreifer bei trotzdem verringertem Verschleiss verstärkt wird.

Die Vorteile der Erfindung bestehen im Endergebnis in einem über lange Zeitdauer störungsfreien Betrieb der gesamten Gurtförderanlage un in der Einsparung der sonst stets aufzuwendenden Reinigungskosten.

## Patentansprüche

1. Aus natürlichem oder synthetischem Kautschuk mit Verstärkungseinlagen hergestellter Fördergurt, dadurch gekennzeichnet, dass zumindest die das Fördergut unmittelbar aufnehmende obere Deckschicht aus einer Mischung eines Naturkautschuks mit Butadienkautschuk. Silikonkautschuk, einem Polyolefin und Silikonöl hergestellt ist, wobei das Polyolefin ein Polyäthylen niedriger Dichte (zwischen 0,910 und 0,925 g/cm³) ist.

2. Fördergurt nach Anspruch 1, dadurch gekennzeichnet, dass die Deckschichtmischung Natur- und Butadienkautschuk in wesentlich höheren Anteilen als die übrigen Bestandteile enthält.

3. Fördergurt nach Anspruch 2, dadurch gekennzeichnet, dass die Deckschichtmischung Natur- und Butadienkautschuk in Anteilen von jeweils etwa 25 %, Silikonkautschuk und Polyolefin dagegen in Anteilen von jeweils höchstens etwa 20 % enthält.

4. Fördergurt nach den Ansprüchen 1 bis 3, dadurch gekennzeichnet, dass der Butakienkautschuk ein Cis-1,4 Polybutadien ist.

## Claims

1. Conveyor belt produced from natural or synthetic rubber with reinforcing plies embedded therein, characterised in that at least the upper cover layer directly receiving the material to be conveyed is produced from a mixture of natural rubber with butadiene rubber, silicone rubber, a polyolefin and silicone oil, the polyolefin being a polyethylene of low density (between 0.910 and 0.925 g/cm³).

2. Conveyor belt according to claim 1, characterised in that the cover layer mixture contains natural and butadiene rubber in considerably higher proportions than the remaining constituents.

3. Conveyor belt according to claim 2, characterised in that the cover layer mixture contains natural and butadiene rubber in proportions of approximately 25 % each, but contains silicone rubber and polyolefin in proportions of approximately 20 % each at the most.

4. Conveyor belt according to claims 1 to 3, characterised in that the butadiene rubber is a Cis-1,4 polybutadiene.

**Revendications**

1. Bande transporteuse fabriquée en caoutchouc naturel ou synthétique avec des insertions de renforcement, caractérisée en ce qu'au moins la couche de revêtement supérieure, qui reçoit directement la matière transportée, est fabriquée en un mélange de caoutchouc naturel, de caoutchouc de butadiène, de caoutchouc de silicone, d'une polyoléfine et d'huile de silicone, la polyoléfine étant un polyéthylène à basse densité (entre 0,910 et 0,925 g/cm³).

2. Bande transporteuse selon la revendication 1, caractérisée en ce que le mélange de la couche de revêtement contient du caoutchouc naturel et du caoutchouc de butadiène dans des proportions sensiblement supérieures à celles des autres constituants.

3. Bande transporteuse selon la revendication 2, caractérisée en ce que le mélange de la couche de revêtement contient du caoutchouc naturel et du caoutchouc de butadiène dans des proportions d'environ 25 % pour chacun de ces constituants et du caoutchouc de silicone et une polyoléfine dans des proportions qui atteignent chacune au maximum environ 20 %.

4. Bande transporteuse selon les revendications 1 à 3, caractérisée en ce que le caoutchouc de butadiène est un Cis-1,4 polybutadiène.